# EUROPÄISCHE PATENTSCHRIFT

(11) **EP 3 482 151 B1**
(45) Veröffentlichungstag und Bekanntmachung des Hinweises auf die Patenterteilung: **28.10.2020**
(21) Anmeldenummer: 17742366.2
(22) Anmeldetag: 27.06.2017
(51) Int. Cl.: F42B 5/38, F42B 35/00, G01J 5/04, G01J 5/08, F41A 9/37

(54) **VERFAHREN UND VORRICHTUNG ZUR TEMPERATURERMITTLUNG WÄHREND DES FÜGENS VON TREIBLADUNGSMODULEN**
METHOD AND DEVICE FOR ASCERTAINING A TEMPERATURE DURING THE JOINING OF PROPELLANT CHARGE MODULES
PROCÉDÉ ET DISPOSITIF DE DÉTERMINATION D'UNE TEMPÉRATURE PENDANT L'ASSEMBLAGE DE MODULES DE CHARGE PROPULSIVE

(30) Priorität: 07.07.2016 DE 102016112510
(43) Veröffentlichungstag der Anmeldung: 15.05.2019
(73) Patentinhaber: Krauss-Maffei Wegmann GmbH & Co. KG, 80997 München (DE)
(72) Erfinder: RACZEK, Matthias, 34127 Kassel (DE); CZOK, Matthias, 34127 Kassel (DE); MELCHER, Lothar, 34127 Kassel (DE)
(74) Vertreter: Feder Walter Ebert
(86) Internationale Anmeldenummer: PCT/DE2017/100538
(87) Internationale Veröffentlichungsnummer: WO 2018/006902

(56) Entgegenhaltungen:
- EP-A1- 0 533 642
- EP-A1- 0 538 219
- EP-A1- 0 855 582
- WO-A1-2011/072674
- WO-A2-2009/120694
- WO-A2-2011/072673
- GB-A- 2 168 811
- GB-A- 2 358 059
- JP-A- 2015 152 197
- US-B1- 9 625 242

## Beschreibung

Die vorliegende Erfindung betrifft eine Fügevorrichtung zum Ausführen einer Fügebewegung zum Zusammenfügen von Treibladungsmodulen zu einer Treibladung sowie ein Verfahren umfassend eine Fügebewegung zum Zusammenfügen von Treibladungsmodulen zu einer Treibladung.

Die Erfindung kann insbesondere bei schweren Waffen, wie Artilleriegeschützen oder Kampfpanzern Einsatz finden. Hierbei kann die Munition aus einem Geschoss und einer Treibladung bestehen, die entweder einzeln oder gemeinsam (patroniert) in das Waffenrohr eingebracht werden können. Bei nicht-patronierter Munition kann zudem vorgesehen sein, dass die Treibladung wiederum eine Mehrzahl an Treibladungsmodulen aufweist, die vor dem Einbringen der Treibladungsmodule in das Waffenrohr, beim Einbringen der Treibladungsmodule in das Waffenrohr oder nach dem Einbringen der Treibladungsmodule in das Waffenrohr zu einer gemeinsamen Treibladung verfügt werden.

Um ein Ziel mit der Waffe bzw. mit dem Geschoss bekämpfen zu können, muss eine Feuerleitlösung ermittelt werden. Dabei wird in Abhängigkeit von der Waffe, der Munition und äußeren Einflüssen, wie Winddaten, die Waffenrichtung ermittelt. Anschließend kann die Waffe in Azimut und Elevation gemäß der bestimmten Feuerleitlösung ausgerichtet und schließlich abgefeuert werden. Es ist dabei bekannt, dass bei der Ermittlung von Feuerleitlösungen für moderne Waffensysteme die Temperatur der Treibladung eine wichtige Einflussgröße darstellt, da die Temperatur der Treibladung beim Abfeuern der Waffe die Austrittsgeschwindigkeit v₀ des Geschosses und damit die Flugbahn oder die Schussweite des Geschosses beeinflusst.

Die mangelnde oder ungenügende Berücksichtigung der Treibladungstemperatur führt dementsprechend zu einer Beeinflussung der Treffergenauigkeit der Waffe.

Entsprechend sind aus dem Stand der Technik bereits verschiedene Vorrichtungen und Verfahren bekannt, um den Einfluss der Temperatur einer Treibladung zu minimieren oder bei der Bestimmung der Feuerleitlösung zu berücksichtigen. Ein Beispiel bildet die EP 0 533 642 A1.

Einerseits ist es bekannt, Treibladungen vorzutemperieren oder vortemperiert zu lagern, um eine möglichst genau definierte Temperatur der Treibladung im Augenblick der Zündung oder beim Abfeuern der Waffe zu erreichen. Dies hat jedoch den Nachteil, dass die Temperierung der Treibladungen aufwendig und energieintensiv ist und darüber hinaus nicht die notwendige Genauigkeit erreicht, so dass die Treffergenauigkeit der Waffe weiterhin nachteilig beeinflusst wird.

Darüber hinaus sind Verfahren bekannt, bei denen die Temperatur der Treibladung durch eine Temperaturmessung der Außenoberfläche der Treibladung gemessen wird. Diese Verfahren haben jedoch den Nachteil, dass die Oberflächentemperatur oder die Temperatur der Außenoberfläche der Treibladung einer Vielzahl äußerer Einflüsse ausgesetzt ist und damit die Temperaturmessung der Außenoberfläche der Treibladung ebenfalls nur eine ungenaue Abschätzung der tatsächlichen Temperatur der Treibladung darstellt.

Außerdem sind bereits Treibladungen bekannt, bei denen ein Temperatursensor und eine entsprechende Übertragungselektronik von der Treibladung umfasst sind, um mittels einer entsprechenden Ausleseeinheit in Verbindung mit der Übertragungselektronik und dem Sensor die Innentemperatur oder Kerntemperatur der Treibladung bestimmen zu können. Durch diese Lösung kann zwar eine verhältnismäßig genaue Bestimmung der Kerntemperatur der Treibladung erfolgen. Nachteilig ist jedoch die Stör- und Fehleranfälligkeit aufgrund der benötigten Übertragung von Daten und die entsprechend aufwendige und kostspielige Herstellung der Treibladungen durch den Einsatz eines Einweg-Temperatursensors und einer entsprechenden Übertragungselektronik.

Der vorliegenden Erfindung liegt dementsprechend die **Aufgabe** zugrunde, eine genauere Bestimmung einer Feuerleitlösung, insbesondere über eine genauere Temperaturermittlung einer Treibladungstemperatur, zu ermöglichen.

Diese Aufgabe wird bei einer Temperaturermittlungseinrichtung für Treibladungen in einer Fügevorrichtung nach Anspruch 1 gelöst.

Dies bedeutet, dass der Sensorkopf grundsätzlich eine Messposition oder Messstellung und eine Ruheposition oder Ruhestellung einnehmen kann. Dabei ist der Übergang zwischen der Ruheposition und der Messposition nicht zwangsläufig auf eine Eigenbewegung des Sensorkopfes zurückzuführen. Vielmehr werden die Messposition und die Ruheposition über die räumliche Anordnung des Sensorkopfes gegenüber der Treibladung definiert. Eine Bewegung des Sensorkopfes gegenüber der Temperaturermittlungseinrichtung ist nicht zwingend erforderlich. Die Messposition stellt also die Position des Sensorkopfes dar, in der der Sensorkopf zur Temperaturmessung in einem Hohlraum der Treibladung angeordnet ist. Dementsprechend stellt die Ruheposition des Sensorkopfes diejenige Position dar, in der der Sensorkopf außerhalb des Hohlraums der Treibladung, insbesondere außerhalb der Treibladung angeordnet ist.

Folglich kann sowohl eine Positionsänderung der Treibladung in der Temperaturermittlungseinrichtung, als auch eine Positionsänderung des Sonsorkopfes in der Temperaturermittlungseinrichtung, als auch eine Positionsänderung von Treibladung und Sensorkopf in der Temperaturermittlungseinrichtung zu einer entsprechenden Änderung der Relativposition zwischen Treibladung und Sensorkopf führen.

Der erfindungsgemäße Grundgedanke sieht vor, die Temperatur der Treibladung möglichst genau zu bestimmen. Dies wird durch das zumindest zeitweise Einbringen eines Sensorkopfes in einen Hohlraum der Treibladung erreicht. In dem Hohlraum der Treibladung herrscht eine Temperatur, die der tatsächlichen Temperatur der Treibladung am Nächsten kommt. Dadurch kann über das Einbringen des Sensorkopfes in den Hohlraum der Treibladung und die Temperaturermittlung während der Anordnung des Sensorkopfes im Hohlraum der Treibladung eine besonders präzise Messung der Temperatur der Treibladung erfolgen.

Die Treibladung wird während der Anordnung des Sensorkopfes in dem Hohlraum der Treibladung aus mehreren Treibladungsmodulen zusammengefügt. Dies bedeutet auch, dass der Hohlraum der Treibladung aus einem oder mehreren Hohlräumen von Treibladungsmodulen gebildet werden kann. Diese einzelnen Hohlräume der jeweiligen Treibladungsmodule können miteinander verbunden oder voneinander getrennt sein.

Gemäß einer ersten vorteilhaften Ausgestaltung der Temperaturermittlungseinrichtung ist vorgesehen, dass die Temperaturermittlungseinrichtung so ausgestaltet ist, dass eine Temperaturmessung einer an den Hohlraum angrenzenden Innenoberfläche der Treibladung ermöglicht wird. Bei der an den Hohlraum angrenzenden Innenoberfläche der Treibladung kann es sich auch um die an den Hohlraum begrenzende Oberfläche der Treibladung handeln. Diese Innenoberfläche oder Oberfläche der Treibladung ist zur Messung der Temperatur besonders bevorzugt, da sie gegenüber dem Hohlraum selbst noch weniger von äußeren Einflüssen abhängig ist und dementsprechend die tatsächliche Temperatur der Treibladung noch besser bestimmbar macht.

Es ist besonders wünschenswert, dass die Temperaturermittlung der Treibladung unmittelbar vor dem Abfeuern der Waffe und zudem möglichst genau erfolgt. Außerdem ist es besonders vorteilhaft, wenn durch den Einsatz der Temperaturermittlungseinrichtung die Schusskadenz der Waffe nicht negativ beeinflusst wird, also die Temperaturermittlung mittels der Temperaturermittlungseinrichtung möglichst schnell erfolgen kann.

Dementsprechend sieht eine weitere besonders bevorzugte Ausführungsform der Temperaturermittlungseinrichtung vor, dass die Temperaturermittlungseinrichtung die Temperaturermittlung der Treibladung innerhalb von einer Sekunde oder weniger auf 1° C genau oder genauer ausführt.

Bekannte Treibladungen und Treibladungsmodule umfassen eine Papphülse, in der beispielsweise Nitrozellulose als eigentliches Treibmittel angeordnet ist. Nitrozellulose ist hygroskopisch und wird dementsprechend von der Papphülse vor dem Eindringen von Feuchtigkeit geschützt. Die erfindungsgemäße Vorrichtung ist so ausgestaltet, dass die Papphülse mit dem Sensorkopf durchdrungen werden kann, obwohl dadurch grundsätzlich das Eindringen von Feuchtigkeit ermöglicht wird. Deshalb ist es joch besonders wünschenswert, dass die Anordnung des Sensorkopfes in der Treibladung möglichst kurz gehalten wird. Außerdem kann es besonders vorteilhaft sein, wenn die Anordnung des Sensorkopfes in der Treibladung kurz vor dem Abfeuern der Waffe erfolgt, da somit die verbleibende Zeit, in der Feuchtigkeit eindringen kann, minimiert wird.

Zudem ist eine besonders wünschenswerte Ausgestaltung der Temperaturermittlungseinrichtung vorgesehen, bei der der Sensorkopf einen Sensor zur kontaktlosen Temperaturermittlung aufweist. Dadurch wird ermöglicht, dass der in der Messposition oder während der Durchführung der Temperaturermittlung in dem Hohlraum der Treibladung angeordnete Sensorkopf die Temperaturermittlung ausführen kann, ohne die Treibladung, insbesondere die zu messende Innenoberfläche der Treibladung zu kontaktieren. Dies ermöglicht einerseits eine sichere Handhabung der Temperaturermittlungseinrichtung. Andererseits wird dadurch auch eine besonders schnelle und einfache Temperaturermittlung ermöglicht, da unter Verwendung eines Sensors zur kontaktlosen Temperaturermittlung eine kontaktlose Temperaturermittlung erfolgen kann, die besonders schnell und sicher ausgeführt werden kann.

Der Sensor kann beispielsweise eine Temperaturermittlung unter Verwendung elektromagnetischer Wellen vorsehen. Solche, beispielsweise optischen Messsensoren können bevorzugt zur kontaktlosen Temperaturermittlung zum Einsatz kommen. Der Sensor könnte zum Beispiel eine Laserquelle und einen Photosensor aufweisen und die Temperaturermittlung anhand von reflektiertem Laserlicht durchführen.

Gemäß einer weiteren besonders vorteilhaften Ausführungsform ist zudem vorgesehen, dass der Sensorkopf optische Bauteile aufweist, die zumindest zur Führung und/oder Auskopplung und/oder Einkopplung von Messstrahlung dienen, auf Basis derer die Temperaturermittlung erfolgt. Durch die von Sensorkopf umfassten optischen Bauteile wird eine besonders vorteilhafte Führung einer Messstrahlung sowohl im Sensorkopf als auch außerhalb des Sensorkopfes ermöglicht. Im Fall einer kontaktlosen Temperaturermittlung mittels einer Messstrahlung kann zudem durch das Vorsehen entsprechender optischer Bauteile eine besonders vorteilhafte Positionierung eines Sensors im Sensorkopf erreicht werden. Denn über die entsprechenden optischen Bauteile kann die Messstrahlung im oder durch den Sensorkopf geführt, ausgekoppelt und entsprechend wieder eingekoppelt werden.

Bei der Messstrahlung kann es sich beispielsweise um Laserstrahlung mit einer, nicht zwangsläufig sichtbaren Wellenlänge handeln.

Außerdem ist es besonders vorteilhaft, wenn die optischen Bauteile so angeordnet sind, dass bei einer Auskopplung der Messstrahlung aus dem Sensorkopf die Messstrahlung im Wesentlichen im rechten Winkel auf die Innenoberfläche der Treibladung auftritt. Dadurch wird u. a. erreicht, dass die Messstrahlung im Wesentlichen in der gleichen Richtung auf die Innenoberfläche der Treibladung auftritt, in der sie von der Innenoberfläche der Treibladung reflektiert wird. Dies wiederum hat den Vorteil, dass die Anzahl der optischen Bauteile zur Einkopplung und Auskopplung der Messstrahlung verringert werden kann. Insbesondere können mittels derselben optischen Bauteile sowohl die Auskopplung als auch die Einkopplung der Messstrahlung bewerkstelligt werden. Außerdem kann dadurch der von der Messstrahlung erfasste Bereich der Innenoberfläche der Treibladung minimiert werden, so dass eine noch präzisere Ermittlung der Temperatur möglich wird.

Gemäß einer weiteren vorteilhaften Ausgestaltung der Temperaturermittlungseinrichtung ist vorgesehen, dass die Temperaturermittlungseinrichtung eine Kommunikationsschnittstelle aufweist, mit der die ermittelten Temperaturen, insbesondere an eine Feuerleiteinrichtung, übertragen werden. Dadurch wird erreicht, dass die von der Temperaturermittlungseinrichtung über den Sensorkopf im Inneren, insbesondere in einem Hohlraum der Treibladung, gemessene Temperatur, welche einen sehr präzisen Rückschluss auf die tatsächliche Temperatur der Treibladung zulässt, an eine Feuerleiteinrichtung übertragen wird und bei der Berechnung oder Bestimmung der Feuerleitlösung berücksichtigt wird.

Die oben genannte Aufgabe der Erfindung wird bei einer Fügevorrichtung nach unabhängigem Anspruch 1 zum Ausführen einer Fügebewegung zum Zusammenfügen von Treibladungsmodulen zu einer Treibladung dadurch **gelöst**, dass die Fügevorrichtung eine Temperaturermittlungseinrichtung gemäß einer der vorangehend beschriebenen Ausführungsformen aufweist.

Durch die erfindungsgemäße Fügevorrichtung wird damit ermöglicht, dass im Rahmen der Fügebewegung gleichzeitig eine Temperaturermittlung der Temperatur der Treibladung erfolgen kann. Dies hat einerseits den Vorteil, dass die Temperaturermittlung in die sonstigen Verfahrensschritte im Vorfeld des Abschusses der Waffe integriert werden kann. Folglich verlängert die Ermittlung der Temperatur der Treibladung nicht den Ladevorgang der Waffe und führt damit auch nicht zu einer Beeinträchtigung der Kadenz der Waffe. Zudem kann die Temperaturermittlung besonders genau oder exakt erfolgen.

Hierbei sei angemerkt, dass die Fügebewegung nicht zwangsläufig auch zum tatsächlichen Zusammenfügen von Treibladungsmodulen zu einer Treibladung ausgeführt werden muss. Dies bedeutet, dass in dem Fall, in dem eine Waffe mit lediglich einem Treibladungsmodul abgefeuert werden soll oder abgefeuert wird, eine Fügevorrichtung eine entsprechende Fügebewegung ausführen kann und eine entsprechende Temperaturermittlungseinrichtung aufweisen kann, ohne dass ein Zusammenfügen von Treibladungsmodulen erfolgt. In diesem Fall sind die Begriffe Treibladungsmodul und Treibladung gleichbedeutend.

Außerdem wird durch eine Fügevorrichtung zum Ausführen einer Fügebewegung zum Zusammenfügen von Treibladungsmodulen zu einer Treibladung mit einer wie oben beschriebenen Temperaturermittlungseinrichtung in besonders vorteilhafter Weise die zum Zusammenfügen der Treibladungsmodule benötigten Bewegungen der Treibladungsmodule mit der zur Temperaturermittlung der Treibladung benötigte oder notwendige zeitweise Anordnung des Sensorkopfes in einem Hohlraum der Treibladung besonders effektiv und synergetisch verknüpft.

Es kann jedoch, unabhängig davon ob eine oder mehrere Treibladungsmodule vorliegen auch eine synergetische Verknüpfung der Temperaturermittlung mit weiteren Prozessen oder Verfahrensschritten im Vorfeld des Abfeuerns einer Waffe erreicht werden. Beispielsweise kann vorgesehen sein, dass das Ausführen der Fügebewegung der Fügevorrichtung gleichzeitig Teil eines Ladevorgangs ist, während dessen das Treibladungsmodul oder die Treibladungsmodule in ein Waffenrohr geladen werden. Damit kann erreicht werden, dass gleichzeitig die Temperaturermittlung und das Laden der Waffe erfolgt, wobei bei der Verwendung von mehreren Treibladungsmodulen gleichzeitig auch noch das Verfügen zu einer gemeinsamen Treibladung stattfinden kann.

Gemäß einer vorteilhaften Ausgestaltung der Fügevorrichtung ist vorgesehen, dass die Fügevorrichtung zumindest einen Fügeanschlag zum Zusammenfügen der Treibladungsmodule zu einer Treibladung aufweist. Als Fügeanschlag im Sinne der vorliegenden Offenbarung sollen derartige Gegenstände verstanden werden, die zumindest während der Ausführung einer Fügebewegung zeitweise mit einem Treibladungsmodul oder einer Treibladung in Kontakt oder zur Anlage kommen und während des Kontaktes oder während der Anlage zumindest zeitweise eine Fügekraft auf das zumindest eine Treibladungsmodul ausüben, welche bei der Verwendung von mehr als einem Treibladungsmodul das Zusammenfügen von mehreren Treibladungsmodulen zu einer Treibladung bewirken.

Gemäß einer weiteren Ausführungsform kann vorgesehen sein, dass zumindest ein Fügeanschlag in einer Fügerichtung beweglich ausgestaltet ist. Durch den beweglich ausgestalteten Fügeanschlag können beispielsweise die einzelnen Treibladungselemente in ihrer Relativposition zueinander verändert und eine entsprechende Fügekraft aufgebracht werden, die das Zusammenfügen der Treibladungsmodule zu einer Treibladung bewerkstelligt.

Gemäß einer weiteren, besonders bevorzugten Ausführungsform ist vorgesehen, dass zumindest ein Fügeanschlag eine Ausnehmung aufweist, die so dimensioniert ist, dass zumindest ein vorderer Teil des Sensorkopfes der Temperaturermittlungseinrichtung in einer Fügerichtung durch den Fügeanschlag hindurchtreten kann. Dies ermöglicht in besonders vorteilhafter Weise, dass die Temperaturermittlung der Treibladung im Rahmen der Fügebewegung zum Zusammenfügen der Treibladungsmodule zu einer Treibladung erfolgt. Denn mit der entsprechenden Ausnehmung zum Durchtritt von zumindest einem vorderen Teil des Sensorkopfes wird ermöglicht, dass während des Kontaktierens oder zur Anlage bringen des Fügeanschlags an einem Treibladungsmodul der Treibladung und damit während der Ausführung der Fügebewegung zum Zusammenfügen der Treibladungsmodule zu einer Treibladung der Sensorkopf der Temperaturermittlungseinrichtung in den Hohlraum der Treibladung eingebracht, also in die Messposition überführt wird und entsprechend die Ermittlung der Temperatur der Treibladung ausgeführt werden kann.

Dadurch kann die Temperaturermittlung ohne wesentlichen zusätzlichen Zeitaufwand im Rahmen des Zusammenfügens der Treibladungsmodule erfolgen.

Gemäß einer weiteren, besonders bevorzugten Ausführungsform ist vorgesehen, dass zumindest ein Fügeanschlag in der Fügerichtung federbeaufschlagt ist. Dadurch wird beispielsweise erreicht, dass eine während der Fügebewegung zum Zusammenfügen der Treibladungsmodule zu einer Treibladung auftretende Fügekraft einen definierten Grenzwert nicht überschreitet. Dementsprechend wird eine sichere Handhabung der Treibladungsmodule und eine sichere Verfügung der Treibladungsmodule zu einer Treibladung erreicht.

Weiter hat eine Federbeaufschlagung zumindest eines Fügeanschlags der Fügevorrichtung im Zusammenhang mit der erfindungsgemäßen Temperaturermittlungseinrichtung jedoch auch den Vorteil, dass eine entgegen der Federbelastung ausgeführte reversible Bewegung des Fügeanschlags und damit eine entsprechende Bewegung des Treibladungsmoduls, der Treibladungsmodule oder der Treibladung besonders vorteilhaft genutzt werden kann, um den Sensorkopf der Temperaturermittlungseinrichtung in einem Hohlraum der Treibladung anzuordnen.

Das heißt, eine Bewegung des Fügeanschlags entgegen der Federbelastung über eine entsprechende von oder über die Treibladungsmodule aufgebrachte Fügekraft und eine damit einhergehende Bewegung der Treibladungsmodule kann dazu genutzt werden, um den Sensorkopf aus der Ruheposition gegenüber der Treibladung in die Messposition gegenüber der Treibladung zu befördern. Umgekehrt kann eine zumindest teilweise Entspannung der Feder eines federbeaufschlagten Fügeanschlags dazu genutzt werden, den Sensorkopf der Temperaturermittlungseinrichtung aus einer Messposition gegenüber der Treibladung in eine Ruheposition gegenüber der Treibladung zu überführen.

Gemäß einer weiteren, besonders vorteilhaften Ausführungsform ist vorgesehen, dass der Sensorkopf in der Fügerichtung unbeweglich ausgestaltet ist. Dadurch wird eine erhöhte Stabilität des Sensorkopfes erreicht, die es dem Sensorkopf gleichermaßen ermöglicht, in den Hohlraum der Treibladung einzudringen und dort die Temperaturmessung oder die Temperaturermittlung auszuführen.

Die eingangs genannte Aufgabe der vorliegenden Erfindung wird durch ein Verfahren nach unabhängigem Verfahrensanspruch 9 zur Ermittlung der Temperatur einer Treibladung gelöst, wobei ein in einer Relativposition zur Treibladung veränderbarer Sensorkopf zumindest zeitweise in einem Hohlraum der Treibladung angeordnet wird und die Ermittlung der Temperatur der Treibladung zumindest während der Anordnung des Sensorkopfes in dem Hohlraum der Treibladung erfolgt. Erfindungsgemäß kann mit dem Verfahren eine Temperaturermittlung besonders genau erfolgen.

In einer vorteilhaften Weiterbildung des Verfahrens ist zudem vorgesehen, dass die Temperatur einer an den Hohlraum der Treibladung angrenzenden Innenoberfläche der Treibladung ermittelt wird. Eine Temperaturermittlung an der Innenoberfläche der Treibladung angrenzend an den Hohlraum ist dabei einerseits besonders vorteilhaft, weil sich der Hohlraum der Treibladung zum Einbringen oder Anordnen des Sensorkopfes eignet und zudem die Innenoberfläche der Treibladung ein besonders gutes Maß oder ein besonders guter Messpunkt für die tatsächliche Temperatur der Treibladung darstellt.

Außerdem ist die Innenoberfläche weniger äußeren Einflüssen ausgesetzt als der Hohlraum selbst. So kann beispielsweise das Eindringen oder Anordnen des Sensorkopfes in den Hohlraum selbst bereits dazu führen, dass ein Wärmeaustausch zwischen dem Hohlraum und der Umgebung stattfindet, der die Temperatur des Hohlraums selbst verfälscht. Ein daraus resultierende Wärmeaustausch mit der Innenoberfläche der Treibladung geht jedoch deutlich langsamer vonstatten, so dass selbst nach Anordnen des Sensorkopfes im Hohlraum der Treibladung noch eine ausreichend genaue Temperaturermittlung an der Innenoberfläche des Hohlraums erfolgen kann.

Eine weitere Ausgestaltung des Verfahrens sieht vor, dass die Temperatur der Treibladung innerhalb von einer Sekunde oder weniger auf 1 ° C genau oder genauer ermittelt wird. Dadurch kann verhindert werden, dass die Temperaturermittlung die Schusskadenz der Waffe negativ beeinflusst.

Außerdem kann es vorteilhaft vorgesehen sein, dass die Temperaturermittlung auf Basis einer Messstrahlung erfolgt, die mittels optischer Bauteile des Sensorkopfs zumindest geführt und/oder ausgekoppelt und/oder eingekoppelt wird. Die Verwendung von Messstrahlung zur Temperaturermittlung hat neben dem Vorteil, dass eine kontaktlose Temperaturermittlung erfolgen kann, auch den Vorteil, dass die Temperaturermittlung schnell und genau erfolgen kann.

Als Messstrahlung kann beispielsweise elektromagnetische Strahlung im infraroten Wellenlängenbereich verwendet werden. Es kann auch Laserstrahlung zum Einsatz kommen.

Eine weitere, besonders vorteilhafte Ausgestaltung des Verfahrens sieht vor, dass die Temperatur kontaktlos gemessen wird. Eine kontaktlose Temperaturermittlung bietet sich insbesondere deshalb an, weil dadurch eine Beschädigung der Treibladung oder eine andere Veränderung der Treibladung, die womöglich deren Eigenschaften negativ beeinflusst, unterbleiben kann. Außerdem kann die Temperaturermittlung schnell und sicher ausgeführt werden.

Gemäß einer weiteren, bevorzugten Ausführungsform des Verfahrens ist vorgesehen, dass bei einer Auskopplung der Messstrahlung aus dem Sensorkopf die Messstrahlung im Wesentlichen im rechten Winkel auf die Innenoberfläche der Treibladung trifft.

Dadurch wird einerseits eine einfache Ermittlung der Temperatur ermöglicht und andererseits eine vorteilhafte und einfache Ausgestaltung des Sensorkopfes erlaubt. Denn nach einem Auftreffen der Messstrahlung auf die Innenoberfläche der Treibladung im rechten Winkel wird die Messstrahlung in der gleichen Richtung von der Innenoberfläche zurückreflektiert und kann dementsprechend über den gleichen Ausbreitungsweg wie bei der Auskopplung, nur in umgekehrter Richtung, wieder in den Sensorkopf eingekoppelt und in diesem geführt, insbesondere zu einem Sensor geführt werden.

Außerdem ist eine Verfahrensvariante vorgesehen, bei der die ermittelten Temperaturen mittels einer Kommunikationsschnittstelle, insbesondere an eine Feuerleiteinrichtung übertragen werden. Damit können die ermittelten Temperaturen im Rahmen einer Feuerleitlösung berücksichtigt und die Treffergenauigkeit der Waffe auch anhand der ermittelten Temperaturen entsprechend erhöht werden.

Die oben definierte Aufgabe der vorliegenden Erfindung wird nach unabhängigem Verfahrensanspruch 9 durch ein Verfahren umfassend eine Fügebewegung zum Zusammenfügen von Treibladungsmodulen zu einer Treibladung gelöst.

Bei dem Verfahren soll die Ausführung der Fügebewegung entscheidend sein, auch wenn dabei nur ein Treibladungsmodul vorliegt und kein tatsächliches Zusammenfügen stattfindet. Die Fügebewegung kann dabei beispielsweise Teil einer Ladebewegung eines Ladeverfahrens sein, mit der ein einzelnes Treibladungsmodul oder eine Mehrzahl von Treibladungsmodulen in ein Waffenrohr einer Waffe geladen werden.

Ein Verfahren umfassend eine Fügebewegung zum Zusammenfügen von Treibladungsmodulen zu einer Treibladung, welches ein Verfahren zur Temperaturermittlung nach der oben beschriebenen Art umfasst, hat den Vorteil, dass die Bewegungen der Treibladungsmodule oder der Treibladung im Rahmen der Fügebewegung besonders vorteilhaft und synergetisch mit den notwendigen Bewegungen zum Anordnen des Sensorkopfes in einem Hohlraum der Treibladung verknüpft werden können. Darüber hinaus hat ein solches Verfahren den Vorteil, dass die unterschiedlichen Aufgaben, nämlich das Zusammenfügen der Treibladungsmodule zu einer Treibladung oder zumindest die Ausführung der Fügebewegung und die Ermittlung der Temperatur der Treibladung zeitgleich oder zeitlich überlappend ausgeführt werden können, so dass insbesondere durch das Verfahren zur Temperaturermittlung der Ladevorgang der Waffe und damit die Kadenz der Waffe nicht negativ beeinflusst wird.

Im Rahmen des Verfahrens umfassend die Fügebewegung zum Zusammenfügen von Treibladungsmodulen zu einer Treibladung kann besonders bevorzugt vorgesehen sein, dass die Fügebewegung zum mittels zumindest einem Fügeanschlag, bevorzugt mittels zwei Fügeanschläge, erfolgt. Der Fügeanschlag oder die Fügeanschläge sind dabei diejenigen Gegenstände, die die Bewegung der Treibladungsmodule zueinander im Rahmen des Zusammenfügens zu einer Treibladung verursachen.

Dementsprechend kann besonders bevorzugt vorgesehen sein, dass zumindest ein Fügeanschlag in eine Fügerichtung bewegt wird. Alternativ kann es jedoch auch vorteilhaft sein, wenn im Fall von zwei Fügeanschlägen beide Fügeanschläge in eine Fügerichtung bewegt werden. Hinsichtlich der Bewegung in einer Fügerichtung sei dazu noch hervorgehoben, dass die Fügerichtung eher als Richtungs-Vektor zu verstehen ist anstatt als Bewegungsrichtung. Dementsprechend sollen eine erste Bewegung eines Fügeanschlags und eine entgegengesetzte Bewegung des Fügeanschlags trotzdem als "in Fügerichtung" betrachtet werden, auch wenn die Bewegung einerseits zu den Treibladungsmodulen hin und andererseits von den Treibladungsmodulen weg gerichtet ist.

Ebenfalls vorteilhaft vorgesehen sein kann, dass während der Fügebewegung zum Zusammenfügen der Treibladungsmodule zu einer Treibladung zumindest ein federbeaufschlagter Fügeanschlag in Fügerichtung bewegt wird. Eine Bewegung eines federbeaufschlagten Fügeanschlags kann besonders vorteilhaft dazu dienen, die beim Ausführen der Fügebewegung zum Zusammenfügen der Treibladungsmodule auftretenden Fügekräfte auf ein Maximalwert zu begrenzen und damit eine Beschädigung der Treibladungsmodule oder der Treibladung vorzubeugen. Ebenfalls kann besonders vorteilhaft vorgesehen sein, dass zur Ermittlung der Temperatur zumindest ein vorderer Teil des Sensorkopfes in Fügerichtung durch eine Ausnehmung in einen Fügeanschlag hindurchtritt. Dabei kann einerseits vorgesehen sein, dass der Sensorkopf gegenüber dem Fügeanschlag bewegt wird. Andererseits kann auch vorgesehen sein, dass der Fügeanschlag gegenüber dem Sensorkopf bewegt wird.

Zusätzlich oder alternativ kann besonders vorteilhaft vorgesehen sein, dass die Treibladungsmodule in Fügerichtung eine Bewegung gegenüber dem insbesondere unbeweglichen Sensorkopf ausführen. Weitere Vorteile und Einzelheiten der erfindungsgemäßen Vorrichtungen und Verfahren werden nachfolgend unter Zuhilfenahme der beigefügten, schematischen Ausführungsbeispiele darstellenden Zeichnungen erläutert werden. Darin zeigen:
- Fig. 1a: eine schematische Darstellung einer erfindungsgemäßen Fügevorrichtung in einem ersten Verfahrenszustand;
- Fig. 1b: eine schematische Darstellung der Fügevorrichtung der Fig. 1a in einem zweiten Verfahrenszustand;
- Fig. 1c: eine schematische Darstellung der Fügevorrichtung der Fig. 1a in einem dritten Verfahrenszustand;
- Fig. 2: eine schematische Darstellung eines Sensorkopfes gemäß einer ersten Ausführungsform;
- Fig. 3: eine schematische Darstellung eines Sensorkopfes gemäß einer zweiten Ausführungsform;
- Fig. 4: eine schematische Darstellung eines Sensorkopfes gemäß einer dritten Ausgestaltung.

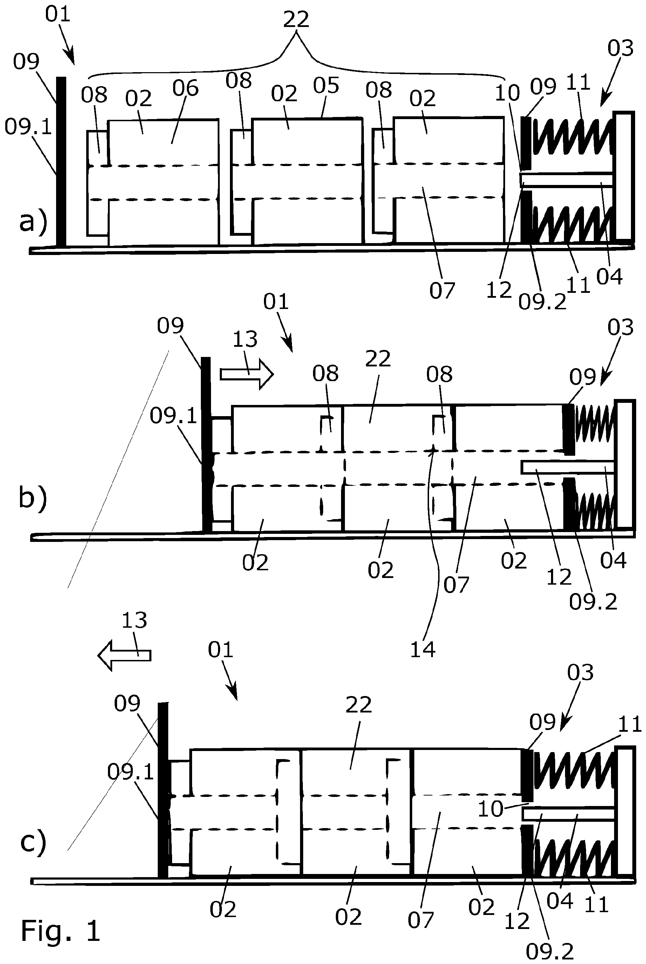

Die Fig. 1a zeigt eine Fügevorrichtung 01 zum Zusammenfügen von mehreren Treibladungsmodulen 02 zu einer Treibladung, umfassend eine Temperaturermittlungseinrichtung 03 mit einem Sensorkopf 04. Die Treibladung 22 umfasst beispielsweise um Treibladungsmodule 02 mit einer festen Papphülse 05, die das Treibmittel 06 aufnimmt und zudem einen im Inneren des Treibladungsmoduls 02 angeordneten Hohlraum 07 ausbildet. Darüber hinaus weisen die Treibladungsmodule 02 auf der Außenseite und auf der Innenseite ausgebildete Kopplungselemente 08 auf, wobei in der Darstellung der Fig. 1 lediglich die auf der Außenfläche ausgebildeten Kopplungselemente 08 dargestellt sind. Diese dienen jedoch zusammen mit einer komplementären Ausgestaltung der inneren Kopplungselemente dazu, dass beim Zusammenfügen der Treibladungsmodule 02 zu einer Treibladung 22 eine form- oder kraftschlüssige Verbindung zwischen den Treibladungsmodulen 02 hergestellt wird. Dazu ist es jedoch erforderlich, dass die Treibladungsmodule 02 so gegeneinander bewegt werden, dass die Kopplungselemente 08 ineinander greifen können.

Die Fügevorrichtung 01 umfasst darüber hinaus zwei Fügeanschläge 09, die beide beweglich ausgestaltet sind. Die Fügeanschläge 09 sind als beweglicher Fügestempel 09.1 und als federbeaufschlagter Fügeanschlag 09.2 ausgebildet. Der federbeaufschlagte Fügeanschläge 09.2 weist dabei eine Ausnehmung 10 auf. Die Ausnehmung 10 des Fügeanschlags 09.2 ist dabei so ausgebildet, dass ein vorderer Teil 12 des Sensorkopfes 04 durch die Ausnehmung und damit durch den Fügeanschlag 09 hindurchtreten kann. Durch die bewegliche Ausgestaltung der Fügeanschläge 09.1 und 09.2, insbesondere des federbeaufschlagten Fügeanschlags 09, wird erreicht, dass der an sich unbeweglich in der Fügevorrichtung 01 angeordnete Sensorkopf 04 gegenüber den Treibladungsmodulen 02 oder der Treibladung 22 bewegen kann, also seine Relativposition zur Treibladung 22 ändern kann und damit von einer Ruheposition in eine Messposition gegenüber der Treibladung (22) überführt werden kann.

In der Darstellung der Fig. 1a befindet sich der Sensorkopf 04 in der Ruheposition gegenüber den Treibladungsmodulen 02 der Treibladung 22. In der gezeigten Position der Fügevorrichtung 01 sind die Treibladungsmodule 02 der Treibladung 22 noch nicht zu einer einheitlichen Treibladung 22 zusammengefügt. Darüber hinaus hat in der in der Fig. 1a dargestellten Verfahrenssituation noch keine Temperaturermittlung mittels der Temperaturermittlungseinrichtung 03 stattgefunden.

Im Anschluss an die in der Fig. 1a dargestellte Verfahrenssituation wird zumindest einer der Fügeanschläge 09, nämlich der Fügestempel 09.1 auf die Treibladungsmodule 02 zubewegt, um das Zusammenfügen der Treibladungsmodule 02 und die Temperaturermittlung der Treibladung 22 auszuführen.

In der Verfahrenssituation der Darstellung der Fig. 1b ist der nicht federbeaufschlagte Fügestempel 09.1 bereits derart in Fügerichtung 13 bewegt worden, dass die Treibladungsmodule 02 der Treibladung 22 an beiden Fügeanschlägen 09 zur Anlage gekommen sind, die komplementären Kopplungselemente 08 miteinander in Eingriff gebracht wurden und zudem der federbeaufschlagte Fügeanschlag 09.2 ebenfalls in Fügerichtung 13 gegenüber der Temperaturermittlungseinrichtung 3, insbesondere auch gegenüber dem Sensorkopf 04, bewegt wurde.

Wie in der Fig. 1b erkenntlich, ist durch die Bewegung des federbeaufschlagten Fügeanschlags 09 in Fügerichtung 13 der vordere Teil 12 des Sensorkopfes 04 in dem Hohlraum 07 der zur Treibladung 22 zusammengefügten Treibladungsmodule 02 angeordnet. Erfindungsgemäß findet in dieser Relativposition des Sensorkopfes 04 gegenüber der Treibladung 22 die bevorzugt kontaktlose Ermittlung der Temperatur der an den Hohlraum 07 der Treibladung 22 angrenzenden Innenoberfläche 14 der Treibladung 22 statt. Dies bedeutet auch, dass der Sensorkopf 04 in der Darstellung der Fig. 1b in die Messposition überführt wurde oder sich in der Messposition gegenüber der Treibladung 22 befindet.

Am Vergleich der Fig. 1a und 1b wird auch deutlich, dass die Anordnung des Sensorkopfes 04 im Hohlraum 7 der Treibladung 22 auch ohne eine Bewegung des Sensorkopfes 04 gegenüber der Fügevorrichtung 01 bewerkstelligt werden kann. Denn zur Anordnung des Sensorkopfes 04 im Hohlraum 07 kann es bereits ausreichend sein, dass die Treibladung 22 oder die Treibladungsmodule 02 gegenüber dem Sensorkopf 04 bewegt wird/werden.

Alternativ kann jedoch auch eine Ausgestaltung der Fügevorrichtung 01 und der Temperaturermittlungseinrichtung 03 vorgesehen sein, bei der sich auch der Sensorkopf 04 in der Fügevorrichtung 01 und/oder in der Temperaturermittlungseinrichtung 03 bewegt. Dazu kann der Sensorkopf 04 beispielsweise einen Antrieb aufweisen oder mit einem Antrieb abtreibbar sein. Alternativ kann der Sensorkopf 04 auch dem Fügestempel 09.1 zugeordnet werden. Dann kann die Bewegung des Sensorkopfes mit der Bewegung des Fügestempels 09.1 verknüpft werden.

Allgemein kann auch die Fügebewegung des oder der Treibladungsmodule und die dabei auftretenden Kräfte ausgenutzt werden, um eine Bewegung des Sensorkopfes 04 zu bewerkstelligen. Beispielsweise können Reibungskräfte an der Außenoberfläche der Treibladungsmodule ausgenutzt werden, um den Sensorkopf zu bewegen, insbesondere in eine Messposition zu verkippen.

In der in Fig. 1c dargestellten Verfahrenssituation der Fügevorrichtung 01 und der Temperaturermittlungseinrichtung 03 ist sowohl das Zusammenfügen der Treibladungsmodule 02 zur Treibladung 22 als auch die Ermittlung der Temperatur der Treibladung 22 abgeschlossen. Durch eine abermalige Bewegung des nicht federbeaufschlagten Fügestempels 09.1 in Fügerichtung 13, jedoch in entgegengesetzter Richtung gegenüber der Darstellung der Fig. 1b wird der federbeaufschlagte Fügeanschlag 09.2 entlastet und die Federn 11 werden zumindest teilentspannt.

Dadurch verändert sich die Anordnung des Sensorkopfes 04, insbesondere des vorderen Teils 12 des Sensorkopfs 04 gegenüber dem federbeaufschlagten Fügeanschlag 09.2 und der darin angeordneten Ausnehmung 10 derart, dass der Sensorkopf 04 nicht mehr in dem Hohlraum 07 der Treibladung 22 angeordnet ist und der vordere Teil 12 des Sensorkopfes 04 auch nicht länger durch die Ausnehmung 10 des Fügeanschlags 09.2 hindurchtritt. Dies bedeutet, dass die Temperaturermittlungseinrichtung 03 wieder in die Ruheposition des Sensorkopfes 4 überführt wurde, ohne dass dabei jedoch eine Eigenbewegung des Sensorkopfes 04 gegenüber der Fügevorrichtung 01 oder der Temperaturermittlungseinrichtung 03 erfolgt ist.

Anhand des Vergleichs der Fig. 1a bis 1c wird ersichtlich, dass durch die erfindungsgemäßen Vorrichtungen 01 und 03 und anhand der beschriebenen Verfahren besonders vorteilhaft eine gleichzeitige oder zumindest zeitlich überlappende Ermittlung der Temperatur der Treibladung 22 und Zusammenfügen der Treibladungsmodule 02 zur Treibladung 22 oder zumindest die Ausführung einer Fügebewegung erfolgen kann. Außerdem wird durch die Fügevorrichtung 01 und die Temperaturermittlungseinrichtung 03 ermöglicht, dass die Temperatur der Treibladung 22 besonders genau, nämlich in dem Hohlraum 07, insbesondere an der den Hohlraum begrenzenden Innenoberfläche 14 der Treibladung 22 gemessen werden kann.

Im Rahmen des Ladevorgangs der Waffe kann vorgesehen sein, dass die Treibladung 22 unmittelbar nach dem Abschluss des in den Fig. 1a bis 1c skizzierten Verfahrens in das Waffenrohr eingebracht wird. Damit erfolgt die Temperaturermittlung der Treibladung 22 unmittelbar bevor die Waffe abgefeuert wird. Wie sich anhand der Fig. 1a bis 1c ebenfalls leicht erkennen lässt, kann das beschriebene Verfahren schnell ausgeführt werden. Insbesondere kann die in der Fig. 1b dargestellte Temperaturermittlung während der zumindest teilweisen Anordnung des Sensorkopfes 04 in dem Hohlraum 07 der Treibladung 22 innerhalb kürzester Zeit, bevorzugt innerhalb einer Sekunde oder schneller erfolgen und dabei eine Genauigkeit von 1° C oder mehr aufweisen.

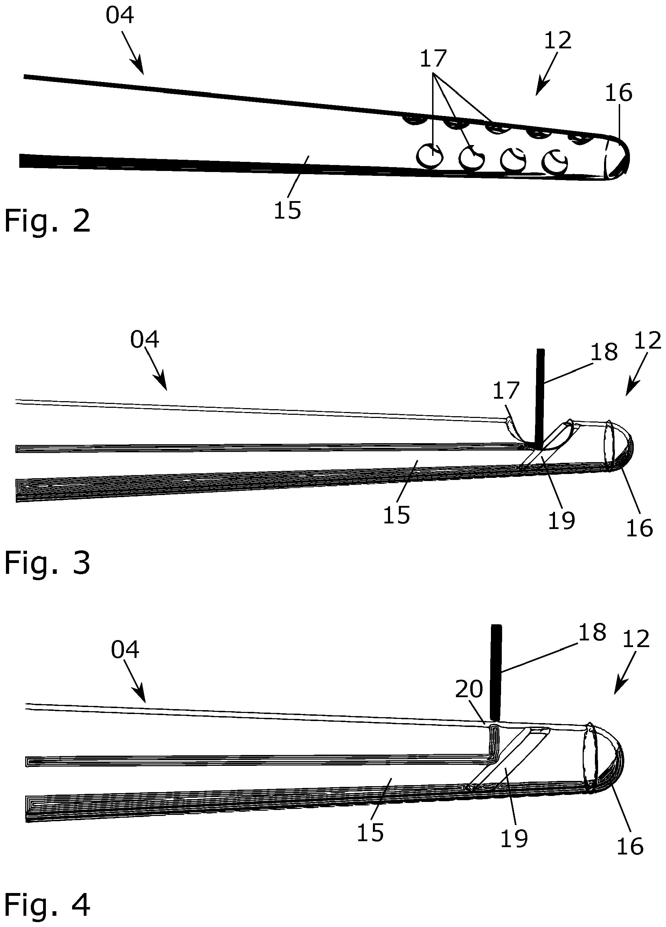

Fig. 2 zeigt eine vergrößerte schematische Darstellung eines Sensorkopfes 04, wobei der Sensorkopf 04 einen vorderen Teil 12 umfasst, der zum Ausführen der Temperaturermittlung zumindest zeitweise in einem Hohlraum einer Treibladung angebracht ist. Um zum Anordnen des Sensorkopfes 4 in der Treibladung die nötige mechanische Stabilität aufzuweisen, umfasst der Sensorkopf 04 ein zum vorderen Teil 12 konisch zulaufendes Gehäuse 15 mit einer halbkugelförmigen Spitze 16. Eine derartige Geometrie des Sensorkopfes 04 und/oder dessen Gehäuses 15 dient neben dem Durchstechen einer Papphülse einer Treibladung auch zur Verkleinerung einer entsprechenden Ausnehmung in einem Fügeanschlag. In der Darstellung der Fig. 2 weist der Sensorkopf 4 darüber hinaus eine Mehrzahl an Messöffnungen 17 auf, mit der die Temperaturermittlung in einem Hohlraum der Treibladung ausgeführt werden kann.

Die Fig. 3 zeigt eine alternative Ausgestaltung eines Sensorkopfes 04, der ebenfalls ein zum vorderen Teil 12 hin konisch zulaufendes Gehäuse 15 mit einer halbkugelförmigen Spitze 16 umfasst. Im Beispiel der Fig. 3 weist der Sensorkopf lediglich eine einzelne Messöffnung 17 auf. Die Messöffnung dient zur Einkopplung und Auskopplung einer Messstrahlung 18. Bei der Messstrahlung 18 kann es sich grundsätzlich um jegliche Art elektromagnetischer Wellen handeln, die zur Temperaturermittlung geeignet sind.

Der Sensorkopf 04 der Fig. 3 umfasst zudem ein optisches Bauteil 19, welches der Führung, der Einkopplung sowie der Auskopplung der Messstrahlung 18 dient. Durch die Anordnung des optischen Bauteils 19 im Sensorkopf 04 der Fig. 3 wird einerseits gewährleistet, dass die aus dem Sensorkopf 04 ausgekoppelte Strahlung im Wesentlichen im rechten Winkel auf eine Innenoberfläche eines Hohlraums einer Treibladung trifft und dementsprechend in entgegengesetzte Richtung wieder auf das optische Bauteil 19 trifft und somit in den Sensorkopf 04 eingekoppelt wird. Innerhalb des Sensorkopfes 04 verläuft die Messstrahlung im Wesentlichen parallel zu einer Hauptsymmetrieachse, insbesondere einer Längsachse des Sensorkopfes 04. Dadurch kann die Messstrahlung 18 von einer nicht dargestellten Strahlungsquelle ausgehen und zu einem ebenfalls nicht dargestellten Sensor des Sensorkopfes 4 geleitet werden.

Die Fig. 4 zeigt einen Sensorkopf 04 in einer abgewandelten Ausführungsform gegenüber der Darstellung der Fig. 3. Wesentlicher Unterschied zwischen den Darstellungen der Fig. 3 und 4 ist die Messöffnung 17 des Sensorkopfes der Fig. 3, welche der Sensorkopf 04 der Fig. 4 nicht aufweist. Die Vermeidung der Messöffnung 17 und die damit einhergehende Erhöhung der mechanischen Stabilität des Sensorkopfes 04 der Fig. 4 wird durch eine entsprechend vorteilhafte Wahl der Eigenschaften der Messstrahlung 18 einerseits und einer entsprechenden Materialwahl des Sensorkopfes 04 im Einund Auskopplungsbereich 20 gewährleistet. Denn je nach Materialwahl des Gehäuses 15, insbesondere im Ein- und Auskopplungsbereich 20 und einer entsprechenden Wahl der Messstrahlung 18 kann die Messstrahlung 18 das Gehäuse 15 im Ein- und Auskopplungsbereich 20 ohne weiteres durchdringen oder überwinden.

### Bezugszeichen:

- 01: Fügevorrichtung
- 02: Treibladungsmodul
- 03: Temperaturermittlungseinrichtung
- 04: Sensorkopf
- 05: Papphülse
- 06: Treibmittel
- 07: Hohlraum
- 08: Kopplungselement
- 09: Fügeanschlag
- 09.1: Fügestempel
- 09.2: federbeaufschlagter Fügeanschlag
- 10: Ausnehmung
- 11: Feder
- 12: vorderer Teil
- 13: Fügerichtung
- 14: Innenoberfläche
- 15: Gehäuse
- 16: Spitze
- 17: Messöffnung
- 18: Messstrahlung
- 19: optische Bauteil
- 20: Ein- und Auskopplungsbereich
- 22: Treibladung

## Patentansprüche

1. Fügevorrichtung zum Ausführen einer Fügebewegung zum Zusammenfügen von Treibladungsmodulen (2) zu einer Treibladung (22) mit einer Temperaturermittlungseinrichtung für eine Treibladung (22) und mit einem
in einer Relativposition zur Treibladung (22) veränderbaren Sensorkopf (4), der zur Temperaturermittlung während der Fügebewegung zumindest zeitweise in einem Hohlraum (7) der Treibladung (22) angeordnet ist.

2. Fügevorrichtung nach Anspruch 1,
**dadurch gekennzeichnet,**
**dass** die Temperaturermittlungseinrichtung (1) so ausgestaltet ist, dass eine Temperaturmessung einer an den Hohlraum (7) angrenzenden Innenoberfläche (14) der Treibladung (22) ermöglicht wird.

3. Fügevorrichtung nach einem der Ansprüche 1 oder 2,
**dadurch gekennzeichnet,**
**dass** der Sensorkopf (4) einen Sensor zur kontaktlosen Temperaturermittlung aufweist.

4. Fügevorrichtung nach einem der vorhergehenden Ansprüche,
**gekennzeichnet durch**
zumindest einen Fügeanschlag (9) zum Zusammenfügen der Treibladungsmodule (2) zu einer Treibladung (22).

5. Fügevorrichtung nach Anspruch 4,
**dadurch gekennzeichnet,**
**dass** zumindest ein Fügeanschlag (9) in einer Fügerichtung (13) beweglichen ausgestaltet ist.

6. Fügevorrichtung nach Anspruch4 oder 5,
**dadurch gekennzeichnet,**
**dass** zumindest ein Fügeanschlag (9) eine Ausnehmung (10) aufweist, die so dimensioniert ist, dass zumindest ein vorderer Teil (12) des Sensorkopfes (4) in Fügerichtung (13) durch den Fügeanschlag (09) hindurchtreten kann.

7. Fügevorrichtung nach einem der Ansprüche 4 bis 6,
**dadurch gekennzeichnet,**
**dass** zumindest ein Fügeanschlag (9) in der Fügerichtung (13) federbeaufschlagt ist.

8. Fügevorrichtung nach einem der vorhergehenden Ansprüche,
**dadurch gekennzeichnet,**
**dass** der Sensorkopf (4) in der Fügerichtung (13) unbeweglich ausgestaltet ist.

9. Verfahren umfassend das Ausführen einer Fügebewegung zum Zusammenfügen von Treibladungsmodulen zu einer Treibladung (22) einschließlich der Ermittlung der Temperatur einer Treibladung (22)
**gekennzeichnet durch**
die Verfahrensschritte:
- zumindest zeitweises Anordnen eines in einer Relativposition zur Treibladung (22) veränderbaren Sensorkopfs (4) in einem Hohlraum (7) der Treibladung (22) während des Ausführens der Fügebewegung; und
- Ermittlung der Temperatur der Treibladung (22) zumindest während der Anordnung des Sensorkopfes (4) in dem Hohlraum (7) der Treibladung (22).

10. Verfahren nach Anspruch 9,
**dadurch gekennzeichnet,**
**dass** die Temperatur einer an den Hohlraum (7) angrenzenden Innenoberfläche (14) der Treibladung (22) ermittelt wird.

11. Verfahren nach Anspruch 10,
**dadurch gekennzeichnet,**
**dass** die Fügebewegung zum Zusammenfügen der Treibladungsmodule (2) zu einer Treibladung (22) mittels zumindest einem Fügeanschlag (9), bevorzugt mittels zwei Fügeanschlägen (9), erfolgt.

12. Verfahren nach Anspruch 11,
**dadurch gekennzeichnet,**
**dass** zumindest ein Fügeanschlag (9) in einer Fügerichtung (13) bewegt wird.

13. Verfahren nach Anspruch 11 oder 12,
**dadurch gekennzeichnet,**
**dass** im Rahmen der Fügebewegung zum Zusammenfügen der Treibladungsmodule (2) zu einer Treibladung (22) zumindest ein federbeaufschlagter Fügeanschlag (9) in der Fügerichtung (13) bewegt wird.

14. Verfahren nach einem der Ansprüche 11 bis 13,
**dadurch gekennzeichnet,**
**dass** zur Ermittlung der Temperatur zumindest ein vorderer Teil (12) des Sensorkopfes (4) in Fügerichtung (13) durch eine Ausnehmung (10) in einem Fügeanschlag hindurchtritt.

15. Verfahren nach einem der vorhergehenden Ansprüche,
**dadurch gekennzeichnet,**
**dass** die Treibladungsmodule (2) in Fügerichtung (13) eine Bewegung gegenüber dem, insbesondere unbeweglichen, Sensorkopf (4) ausführen.

## Claims

1. A joining device for carrying out a joining movement for joining together propellant charge modules (2) to form a propellant charge (22) with a temperature ascertaining device for a propellant charge (22) and with a sensor head (4) which is variable in a relative position in relation to the propellant charge (22) and which is at least temporarily arranged in a cavity (7) of the propellant charge (22) for ascertaining the temperature during the joining movement.

2. The joining device as claimed in claim 1, **characterized in that** the temperature ascertaining device (1) is designed so as to make it possible to measure the temperature of an inner surface (14) of the propellant charge (22) adjoining the cavity (7).

3. The joining device as claimed in claim 1 or 2, **characterized in that** the sensor head (4) comprises a sensor for contactless ascertainment of the temperature.

4. The joining device as claimed in one of the previous claims, **characterized by** at least one joining stop (9) for joining together the propellant charge modules (2) to a propellant charge (22).

5. The joining device as claimed in claim 4, **characterized in that** at least one joining stop (9) is movably designed in a joining direction (13).

6. The joining device as claimed in claim 4 or 5, **characterized in that** at least one joining stop (9) comprises a clearance (10), which is dimensioned such that at least a front part (12) of the sensor head (4) can pass through the joining stop (9) in the joining direction (13).

7. The joining device as claimed in claim 4 to 6, **characterized in** at least one joining stop (9) is spring-loaded in the joining direction (13).

8. The joining device as claimed in one of the previous claims, **characterized in that** the sensor head (4) is immovably designed in the joining direction (13).

9. A method comprising carrying out a joining movement for joining together propellant charge modules (2) to form a propellant charge (22) including ascertaining a temperature of a propellant charge (22), **characterized by** the method steps:
- at least temporarily arranging a sensor head (4) which is variable in a relative position in relation to the propellant charge (22) in a cavity (7) of the propellant charge (22) during the execution of the joining movement; and
- ascertaining the temperature of the propellant charge (22) at least while the sensor head (4) is arranged in the cavity (7) of the propellant charge (22).

10. The method as claimed in claim 9, **characterized in that** the temperature of an inner surface (14) of the propellant charge (22) adjoining the cavity (7) is ascertained.

11. The method as claimed in claim 10, **characterized in that** the joining movement for joining together the propellant charge modules (2) to form the propellant charge (22) is performed by at least one joining stop (9), preferably by two joining stops (9).

12. The method as claimed in claim 11, **characterized in that** at least one joining stop (9) is moved in a joining direction (13).

13. The method as claimed in claim 11 or 12, wherein in the course of the joining movement for joining together the propellant charge modules (2) to form the propellant charge (22), at least one joining stop including at least one spring-loaded joining stop (9) is moved in the joining direction (13).

14. The method as claimed in claim 12 or 13, **characterized in that** for ascertaining the temperature, at least a front part (12) of the sensor head (4) passes through a clearance (10) in the at least one joining stop in the joining direction (13).

15. The method as claimed in one of the previous claims, **characterized in that** the propellant charge modules (2) carry out a movement in the joining direction (13) with respect to the sensor head (4), which is particularly immovable.

## Revendications

1. Système d'assemblage destiné à exécuter un mouvement d'assemblage en vue d'assembler des modules de charge propulsive (2) en une charge propulsive (22),
comprenant un dispositif de détermination de température pour une charge propulsive (22) et comprenant une
tête de capteur (4) dont la position relative par rapport à la charge propulsive (22) peut être modifiée et qui est disposée au moins temporairement dans un espace creux (7) de la charge propulsive (22) pendant le mouvement d'assemblage en vue de déterminer la température.

2. Système d'assemblage selon la revendication 1, **caractérisé en ce que** le dispositif de détermination de température (1) est configuré de telle sorte qu'une mesure de température d'une surface intérieure (14) de la charge propulsive (22), adjacente à l'espace creux (7), est rendue possible.

3. Système d'assemblage selon l'une des revendications 1 et 2, **caractérisé en ce que** la tête de capteur (4) possède un capteur destiné à la détermination de température sans contact.

4. Système d'assemblage selon l'une des revendications précédentes, **caractérisé par** au moins une butée d'assemblage (9) servant à l'assemblage des modules de charge propulsive (2) en une charge propulsive (22).

5. Système d'assemblage selon la revendication 4, **caractérisé en ce qu'**au moins une butée d'assemblage (9) est configurée de manière mobile dans une direction d'assemblage (13).

6. Système d'assemblage selon la revendication 4 ou 5, **caractérisé en ce qu'**au moins une butée d'assemblage (9) possède un creux (10) qui est dimensionné de telle sorte qu'au moins une partie avant (12) de la tête de capteur (4) peut passer à travers la butée d'assemblage (09) dans la direction d'assemblage (13).

7. Système d'assemblage selon l'une des revendications 4 à 6, **caractérisé en ce qu'**au moins une butée d'assemblage (9) est sollicitée par un ressort dans la direction d'assemblage (13).

8. Système d'assemblage selon l'une des revendications précédentes, **caractérisé en ce que** la tête de capteur (4) est configurée de manière immobile dans une direction d'assemblage (13).

9. Procédé comprenant l'exécution d'un mouvement d'assemblage en vue d'assembler des modules de charge propulsive en une charge propulsive (22), y compris la détermination de la température d'une charge propulsive (22),
**caractérisé par** les étapes suivantes :
- disposition au moins temporaire d'une tête de capteur (4), dont la position relative par rapport à la charge propulsive (22) peut être modifiée, dans un espace creux (7) de la charge propulsive (22) pendant l'exécution du mouvement d'assemblage ; et
- détermination de la température de la charge propulsive (22) au moins pendant la disposition de la tête de capteur (4) dans l'espace creux (7) de la charge propulsive (22).

10. Procédé selon la revendication 9, **caractérisé en ce que** la température d'une surface intérieure (14) de la charge propulsive (22), adjacente à l'espace creux (7), est déterminée.

11. Procédé selon la revendication 10, **caractérisé en ce que** le mouvement d'assemblage en vue d'assembler les modules de charge propulsive (2) en une charge propulsive (22) est effectué au moyen d'au moins une butée d'assemblage (9), de préférence au moyen de deux butées d'assemblage (9).

12. Procédé selon la revendication 11, **caractérisé en ce qu'**au moins une butée d'assemblage (9) est déplacée dans une direction d'assemblage (13).

13. Procédé selon la revendication 11 ou 12, **caractérisé en ce que** dans le cadre du mouvement d'assemblage en vue d'assembler les modules de charge propulsive (2) en une charge propulsive (22), au moins une butée d'assemblage (9) sollicitée par un ressort est déplacée dans la direction d'assemblage (13).

14. Procédé selon l'une des revendications 11 à 13, **caractérisé en ce qu'**en vue de déterminer la température, au moins une partie avant (12) de la tête de capteur (4) peut passer à travers un creux (10) dans une butée d'assemblage dans la direction d'assemblage (13).

15. Procédé selon l'une des revendications précédentes, **caractérisé en ce que** les modules de charge propulsive (2) exécutent, dans la direction d'assemblage (13), un mouvement à l'opposé de la tête de capteur (4), notamment immobile.
